# EUROPÄISCHE PATENTSCHRIFT

(11) **EP 0 338 478 B1**
(45) Veröffentlichungstag und Bekanntmachung des Hinweises auf die Patenterteilung: **17.02.1993**
(21) Anmeldenummer: 89106840.5
(22) Anmeldetag: 17.04.1989
(51) Int. Cl.: C02F 1/02

(54) **Verfahren zur Zersetzung von in Abwässern gelösten explosionsfähigen Salpetersäureestern**
Process for decomposition of explosive nitrate esters dissolved in waste waters
Procédé de décomposition d'esters explosibles d'acide nitrique dissous dans des eaux usées

(30) Priorität: 20.04.1988 DE 3813184
(43) Veröffentlichungstag der Anmeldung: 25.10.1989
(73) Patentinhaber: Dynamit Nobel Aktiengesellschaft, 53839 Troisdorf (DE)
(72) Erfinder: Gresser, Wilhelm, Dr., D-4710 Lüdinghausen (DE); Schelhase, Klaus, D-5210 Troisdorf-Kriegsdorf (DE); Frisch, Heinz Günther, Dr., D-6342 Haiger-Allendorf (DE); Kaschel, Klaus, D-5000 Köln 90 (DE); Reinecke, Berent, D-5909 Burbach (DE); Trautmann, Wilh. Heinrich, Dr., D-5909 Burbach (DE)

(56) Entgegenhaltungen:
- EP-A- 0 005 203
- US-A- 4 042 502
- US-A- 4 415 456

## Beschreibung

Gegenstand der vorliegenden Erfindung ist ein Verfahren zur Zersetzung von in Abwässern gelösten, biologisch nicht abbaufähigen explosionsfähigen Salpetersäureestern in Stoffe, die sich biologisch abbauen lassen.

Bei der Herstellung von Sprengstoffen und insbesondere bei der Herstellung der in Sprengstoffen eingesetzten Salpetersäureester fallen Abwässer an, die diese Salpetersäureester gelöst enthalten. Da die Salpetersäureester sowohl Bakterien- als auch Fischgiftigkeit selbst bei niedrigen Konzentrationen besitzen, ist ein Entfernen dieser Verbindungen noch vor ihrem Einleiten in biologische Reinigungsanlagen oder Vorfluter notwendig.

Es ist bekannt, die Salpetersäureester durch Extraktion zu entfernen (vgl. DE-OS 26 23 107). Bei diesem Verfahren verbleiben jedoch Reste des Extraktionsmittels im Abwasser, und eine quantitative Abtrennung ist nicht möglich, so daß nach dieser Behandlung immer noch eine zusätzliche Entsorgung erfolgen muß.

Es ist weiterhin bekannt, Salpetersäureester durch Verseifung zu zersetzen und auf diese Weise Abwässer, die diese Ester enthalten, zu reinigen. Im allgemeinen erfolgt dies bei erhöhter Temperatur und bei einem hohen pH-Wert. Nachteilig bei diesem Verfahren wirken sich der dabei notwendige hohe Energieaufwand und die entstehenden hohen Salzfrachten aus, die bei der anschließenden Neutralisation anfallen.

Es bestand deshalb die Aufgabe, die in Abwässern der Sprengstoffherstellung gelöst enthaltenen Salpetersäureester in einem Verfahren zu zersetzen, das möglichst quantitativ wirkt, bei dem keine zusätzlichen Nebenprodukte anfallen und das mit einem möglichst geringen Energieaufwand durchführbar ist. Weiterhin muß bei dem aufzufindenden Verfahren gewährleistet sein, daß aufgrund der thermischen Instabilität der Salpetersäureester keine Explosionen auftreten.

In Erfüllung dieser Aufgabe wurde nun ein Verfahren zur Zersetzung von in Abwässern gelösten, biologisch nicht abbaufähigen explosionsfähigen Salpetersäureestern gefunden, das dadurch gekennzeichnet ist, daß man die im Wasser gelösten Ester unter Druck im flüssigen Aggregatzustand auf Temperaturen zwischen 150 und 300 °C, vorzugsweise zwischen 180 und 250 °C erhitzt.

Bei Anwendung dieser Verfahrensweise werden die in dem Abwasser gelösten Salpetersäureester praktisch quantitativ in Bruchstücke gespalten, die nicht mehr giftig sind, wie z.B. den Oxidationsprodukten der Glycole, bis einschließlich CO₂, die sich in einer biologischen Aufbereitungsanlage abbauen lassen. In den erfindungsgemäß gereinigten Abwässern lassen sich die Salpetersäureester nicht mehr nachweisen, d.h. die Konzentration an diesen Estern liegt unter 10 ppm. Trotz der relativ hohen Temperaturen, bei denen sich die reinen Salpetersäureester bereits detonativ umsetzen, treten bei der beanspruchten Arbeitsweise keine Explosionen auf.

Es ist erfindungswesentlich, daß die Salpetersäureester in gelöster Form in den zu behandelnden Abwässern vorliegen. Die Konzentration hängt von der Löslichkeit der jeweiligen Ester im Wasser und von den übrigen Ballaststoffen des Abwassers ab. Im allgemeinen werden mit den Salpetersäureestern gesättigte Lösungen eingesetzt. Es lassen sich jedoch auch Abwässer mit geringerer Konzentration an Salpetersäureestern erfindungsgemäß verarbeiten.

Die thermische Belastung des Abwassers erfolgt unter Druck; der Druck muß so groß sein, daß er oberhalb des Siededrucks des Abwassers liegt, so daß dieses bei der Temperaturbehandlung flüssig bleibt. Der anzuwendende Druck, auf den das Abwasser vor der thermischen Belastung gebracht werde muß, hängt von der gewählten Arbeitstemperatur ab. Bei einer Temperaturbehandlung von etwa 200 °C wird zweckmäßigerweise ein Druck von 20 bar angewendet.

Die Zersetzung der Salpetersäureester unter den erfindungsgemäßen Bedingungen findet sehr schnell statt. Die Verweilzeiten im beanspruchten Temperaturbereich können deshalb sehr kurz sein, so daß bereits bei einer Verweildauer von 1 Minute eine vollständige Zersetzung eintritt. Bei einer kontinuierlichen Arbeitsweise können demzufolge auch große Abwassermengen, z.B. 2 000 1 Abwasser oder mehr erfindungsgemäß aufgearbeitet werden.

Die Abwässer, die erfindungsgemäß aufgearbeitet werden, sind im allgemeinen saure Lösungen, deren pH-Wert zwischen 1 und 4 schwankt. Das erfindungsgemäße Verfahren läßt sich mit Abwässern durchführen, deren pH-Wert unter 7 liegt. Auch neutrale Lösungen lassen sich erfindungsgemäß aufarbeiten.

Die Salpetersäureester, die erfindungsgemäß zersetzt werden, sind hauptsächlich die Salpetersäureester des Glycerins und des Ethylenglykols. Unter den Begriff Salpetersäureester sollen aber auch die entsprechenden Ester einwertiger oder mehrwertiger Alkohole, die in Sprengstoffgemischen eingesetzt werden, verstanden werden. Als Beispiele seien Butylnitrat, Diethylenglycolnitrat oder Butantrioltrinitrat genannt. Auch Gemische der genannten Verbindungen lassen sich erfindungsgemäß verarbeiten.

Das erfindungsgemäße Verfahren läßt sich sowohl kontinuierlich als auch diskontinuierlich durchführen. Bei einer kontinuierlichen Arbeitsweise geht man vorzugsweise derart vor, daß das zersetzte, noch heiße Abwasser zum Vorwärmen des zu behandelnden Abwassers eingesetzt wird. Auf diese Weise läßt sich die zur Zersetzung eingesetzte Energie optimal ausnutzen.

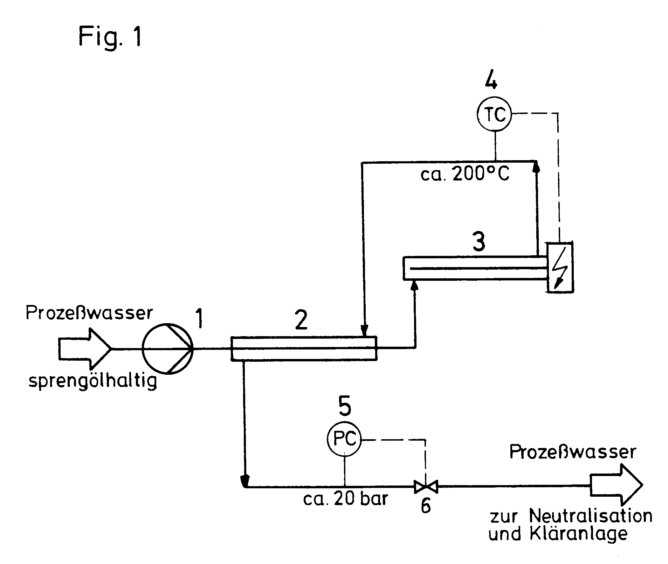

In dem Fließbild der Figur 1 wird die vorliegende Erfindung als Ausführungsbeispiel dargelegt. Ein schwefel- und salpetersaures Prozeßwasser aus einer Sprengstoffertigung, das Ethylenglykoldinitrat (EGDN) und Glycerintrinitrat (NG) gelöst enthält, wird kontinuierlich mit der Pumpe 1 auf einen Druck von ca. 20 bar gebracht. Dieser Druck liegt oberhalb des Siededrucks des Abwassers, um eine Verdampfung des Prozeßwassers bei der anschließenden Erwärmung zu vermeiden.

Das Prozeßwasser strömt mit einer Fließgeschwindigkeit bis zu 2 m³/h durch den hochleistungsfähigen Wärmeaustauscher 2, wo es durch Wärmeabgabe des Ablaufs aus dem Heizer 3 auf 190 bis 195 °C erhitzt wird, in den daran nachgeschalteten Heizer 3, in dem es auf die endgültige Temperatur von ca. 200 °C gebracht wird. Im Heizer 3 wird während einer Verweilzeit von nur einigen Sekunden das Gemisch aus EGDN und NG vollständig zersetzt. Mit dem Regler 4 wird die Temperatur und mit dem Regler 5 der Druck auf die angegebenen Werte konstant gehalten. Mit 6 wird ein Druckregelventil bezeichnet.

Das behandelte Wasser enthält keine nachweisbaren Salpetersäureester und durchläuft anschließend den Wärmeaustauscher 2, in dem es auf Raumtemperatur abgekühlt wird. Nachdem es bei 5 entspannt ist, wird es zur weiteren Reinigung einer Neutralisations- und Kläranlage zugeführt, wo die Neutralisation und daran anschließend der biologische Abbau der thermischen Zersetzungsprodukte erfolgt.

## Patentansprüche

1. Verfahren zur Zersetzung von in Abwässern gelösten, biologisch nicht abbaubaren explosionsfähigen Salpetersäureestern in Stoffe, die sich biologisch abbauen lassen, **dadurch gekennzeichnet,** daß das Abwasser, das die gelösten Ester enthält, unter einem Druck, der oberhalb des Siededrucks des Abwassers liegt, im pH-Bereich von 1 bis 7 auf Temperaturen zwischen 150 und 300°C erhitzt wird.

2. Verfahren gemäß Anspruch 1, dadurch gekennzeichnet, daß sich der pH-Bereich von 1 bis 4 erstreckt.

3. Verfahren gemäß Anspruch 1 oder 2, dadurch gekennzeichnet, daß auf Temperaturen zwischen 180 bis 250°C erhitzt wird.

4. Verfahren gemäß einem der vorhergehenden Ansprüche, dadurch gekennzeichnet, daß bei einer kontinuierlichen Fahrweise das erhitzte und die Zersetzungsprodukte der Salpetersäureester enthaltende Abwasser seine Wärme an das zu behandelnde Abwasser abgibt.

## Claims

1. Process for the decomposition into substances which may be decomposed biologically, of explosive nitric acid esters which are dissolved in waste waters and which cannot be decomposed biologically, characterised in that the waste water which contains the dissolved ester is heated under a pressure which is above the boiling pressure of the waste water, in the pH range of 1 to 7 to temperatures between 150 and 300°C.

2. Process according to Claim 1, characterised in that the pH range extends from 1 to 4.

3. Process according to Claim 1 or 2, characterised in that there is heating to temperatures between 180 to 250°C.

4. Process according to one of the foregoing claims, characterised in that the heated waste water containing the decomposition products from the nitric acid ester gives up its heat to the waste water to be treated in a continuous procedure.

## Revendications

1. Procédé pour décomposer en matières dégradables biologiquement des esters d'acide nitrique explosibles, non dégradables biologiquement, dissous dans des eaux usées, caractérisé par le fait que l'eau usée contenant les esters dissous est chauffée à des températures comprises entre 150 et 300°C, dans un domaine de pH de 1 à 7, sous une pression supérieure à la pression d'ébullition de l'eau usée.

2. Procédé selon revendication 1, caractérisé par le fait que le domaine de pH s'étend de 1 à 4.

3. Procédé selon revendication 1 ou 2, caractérisé par un échauffement à des températures entre 180 à 250°.

4. Procédé selon l'une des revendications précédentes, caractérisé par le fait que lors d'une opération en continu, l'eau usée chauffée, contenant les produits de décomposition des esters d'acide nitrique, cède sa chaleur à l'eau usée à traiter.
